# EUROPÄISCHE PATENTANMELDUNG

(11) **EP 2 563 033 A1**
(43) Veröffentlichungstag der Anmeldung: **27.02.2013**
(21) Anmeldenummer: 12181481.8
(22) Anmeldetag: 23.08.2012
(51) Int. Cl.: H04N 21/434, H04N 21/438, H04N 21/462, H04N 21/6547, H04N 5/50

(54) **Verfahren und DVB-Empfangseinheit zur automatischen Sortierung einer Senderliste**

(30) Priorität: 23.08.2011 DE 102011081377
(71) Anmelder: HFL Verwaltungs GmbH, 78112 St. Georgen (DE)
(72) Erfinder: Litzinger, Wolfgang, 67693 Fischbach (DE)
(74) Vertreter: Patentanwälte Westphal, Mussgnug & Partner

(57) **Zusammenfassung**

Die Erfindung betrifft ein Verfahren zur Sendersortierung einer Senderliste einer DVB-Empfangseinheit mindestens eines Broadcast-Mediums, bei dem die DVB-Empfangseinheit mit einem aus mehreren DVB-Netzwerken auswählbaren Netzwerk verbindbar ist und die Senderliste mittels eines Sendersuchlaufs ermittelt wird sowie die Daten von den im Sendersuchlauf empfangenen Sendern mit Sortierkriterien verglichen werden, wobei wenigstens einem Programmplatz einer Programmliste der DVB-Empfangseinheit wenigstens ein Sortierkriterium zugeordnet wird, und die empfangenen Sender in Abhängigkeit des Vergleichs dem jeweiligen Programmplatz zugeordnet werden, erfindungsgemäß ist vorgesehen, dass
- dem wenigstens einen Programmplatz ein Datensatz oder mehrere Datensätze als diesen Programmplatz spezifizierendes Sortierkriterium bzw. spezifizierende Sortierkriterien zugeordnet wird bzw. werden,
- der Datensatz bzw. die Datensätze jeweils wenigstens einen aus netzwerkspezifischen DVB-Service-Informationen (DVB-SI) ausgewählten Parameter umfasst bzw. umfassen, und
- der mindestens eine Parameter eines Datensatzes einen Sender netzwerkspezifisch eindeutig spezifiziert bzw. die mindestens einen Parameter der Datensätze jeweils netzwerkspezifisch den gleichen Sender in unterschiedlichen Netzwerken eindeutig spezifizieren.

## Beschreibung

Die Erfindung betrifft ein Verfahren zur Sendersortierung einer Senderliste einer mit einem DVB-Netzwerk verbundenen DVB-Empfangseinheit mindestens eines Broadcast-Mediums gemäß Oberbegriff des Anspruchs 1. Ferner betrifft die Erfindung eine DVB-Empfangseinheit für mindestens ein Broadcast-Medium zur Durchführung des erfindungsgemäßen Verfahrens.

Die digitale Übertragung von Rundfunkprogrammen (Fernseh- und Radioprogramme) erfolgt in Europa im DVB-Standard. Gemäß diesem DVB(Digital Video Broadcast)-Standard werden neben Fernseh- und Radioprogrammen auch Zusatzinformationen und neue Datendienste angeboten.

Eine DVB-Empfangseinheit empfängt aus einem angeschlossenen DVB-Netzwerk, bspw. einem Kabelnetzwerk (DVB-C) einen dem ausgewählten Kanal entsprechenden, als Transportstrom (TS) bezeichneten Datenstrom, in dem eine Vielzahl von Kanälen gemultiplext ist. Aus diesem bspw. über ein Kabel übertragenen Transportstrom werden die gewünschten Video-, Audio- und Datenströme (z. Bsp. Teletextdaten) getrennt und anschließend dekodiert.

Weiter werden gemäß diesem DVB-Standard mit einem solchen Transportstrom zusätzliche Informationen (programmspezifische Information, PSI Tables) als Metadaten übermittelt, die es dem DVB-Empfänger ermöglichen, in einem gemultiplexten Transportstrom einzelne Programme, wie bspw. Dienste oder Rundfunkprogramme zu lokalisieren, zu demultiplexen und zu decodieren. Hierzu werden eine große Anzahl von Informationstabellen (PSI Tables) mitgesendet. Diese zusätzlichen Informationen, gemäß DVB-Standard "Program Specific Information" (PSI) und "Service Information" (SI) bezeichnet, werden in sogenannten "Programm-Specific-Information-Tabellen" und weiteren Tabellen, DVB-Sevice-Informationen (DVB-SI) genannt, codiert. Diese weiteren Tabellen enthalten Informationen, die nicht nur den aktuellen Transportstrom betreffen, sondern auch für ein oder mehrere DVB-Netzwerke relevant sein können, die aus mehreren Multiplexen bestehen.

So gibt es neben anderen solchen Tabellen, wie Bouquest Association Table (BAT), insbesondere die Dienstbeschreibungstabelle (Service Description Table, SDT) und die Ereignisbeschreibungstabelle (Event Information Table, EIT).

Die SDT beschreibt einen Dienst innerhalb eines Transportstromes sowie den Namen des Service Provider und welchen Status der Transportstrom hat. Ein Dienst oder ein Kanal, insbesondere ein Sender, ist eindeutig referenziert durch die Parameter Transport Stream ID (TS ID), Original Network ID (ONID) und Service ID (Service ID). Auch die EIT, die zusätzlich noch die Events, die innerhalb des Transportstromes chronologisch auftreten, beschreibt, enthält diese Parameter.

Bei allen digitalen Übertragungswegen (DVB S/S2, DVB-T/T2 DVB-C/C2) von Rundfunkprogrammen besteht das Problem, dass die einzelnen Kanäle in der Regel nicht in der Reihenfolge übertragen werden, in der die Mehrzahl der Benutzer bzw. Kunden einer DVB-Empfangseinheit diese sehen möchte, sondern in einer Reihenfolge, die der Dienstanbieter, bspw. eines Kabelnetzes nach unterschiedlichen Gesichtspunkten vorgibt. In der Regel werden mehrere Rundfunkprogramme auf einem gemeinsamen Transponder übertragen. Diese Programme müssen nicht thematisch zusammengehören.

In Deutschland ist es eine lange Tradition, dass der erste Programmplatz mit dem Sender "ARD das Erste" und der zweite Programmplatz mit dem Sender "ZDF" belegt ist. Diese beiden Sender gehören aber zu unterschiedlichen Anbietern und werden somit in der Regel nicht über den gleichen Transponder übertragen.

In der Regel speichern digitale Empfangsgeräte wie eine DVB-Empfangseinheit die Sender nach einer automatischen Sendersuche in der Reihenfolge, in der sie gefunden worden sind. Hierbei ergibt sich in der Regel die Reihenfolge nach der Empfangsfrequenz und bei gleicher Empfangsfrequenz nach der sogenannten, bereits oben erwähnten Service-ID. Diese Reihenfolge hat nichts mit der vom Benutzer der DVB-Empfangseinheit gewünschten Reihenfolge zu tun und führt zu einer Kanal- bzw. Programmliste, bei der deutsche und ausländische Sender und Free- und Pay-TV Sender für den Benutzer bzw. Kunden ohne erkennbares System gemischt sind.

Es gibt Verfahren, bei denen die Sender in einer anderen Reihenfolge gespeichert werden als der, in der sie über einen Sendersuchlauf gefunden werden. Hierbei wird in der Regel der Kanalname als Sortierkriterium verwendet. Hierbei gibt es jedoch erhebliche Probleme, da nicht alle gewünschten Kanäle in allen Kabelnetzen eingespeist werden und es oftmals Namensgleichheiten oder Namensänderungen gibt. So hat sich beispielsweise der Sender "ZDF Dokukanal" in "ZDF Neo" umbenannt. Bei vielen Sendern gibt es Namensgleichheiten; so gibt es in den meisten Kabelnetzen den Sender "Discovery Channel" mehrmals über verschiedene Pay-TV Anbieter. Eine automatische Sortierung nach dem Namen kann dabei nicht erfolgreich sein.

Ein solches gattungsbildendes Verfahren zur Sendersortierung ist bspw. aus der DE 10 2009 003 775 B3 bekannt, bei dem über einen Sendersuchlauf eines Videoempfangsgerätes eine Anzahl von Fernsehsendern empfangen werden, wobei jedem empfangenen Fernsehsender ein Sendername zugeordnet ist. Das Videoempfangsgerät vergleicht den Sendernamen mit Sortierkriterien, wobei jedes Sortierkriterium einem von mehreren Programmplätzen und/oder einer von Gruppe von Programmen zugeordnet ist. Das Videoempfangsgerät ordnet den empfangenen Fernsehsender in Abhängigkeit des Vergleichsergebnisses dem jeweiligen Programmplatz zu und/oder fügt den empfangenen Fernsehsender der jeweiligen Gruppe von Programmen hinzu. Mindestens eines der Sortierkriterien besteht aus einer Anzahl additiv miteinander verknüpfter Teilbedingungen, von denen mindestens eine als regulärer Ausdruck ausgebildet ist, so dass sie von mehreren Sendernamen erfüllbar ist. Falls für einen empfangenen Sender kein Sortierkriterium zutrifft, wird dieser Sender am Ende einer empfangbaren Programmliste angeordnet.

Bei diesem bekannten Verfahren können die Sortierkriterien fest vorgegeben sein oder vom Benutzer bzw. Anwender veränderbar sein. Auch können diese Sortierkriterien aktualisiert werden.

Es gibt weitere Verfahren, bei denen die DVB-Empfangseinheit selbst feststellen kann, wenn sich auf einem oder mehreren Transpondern die Senderbelegung geändert hat. Hierzu ist es aber notwendig, dass der Benutzer einen Sender auf dem gleichen Transponder ansieht oder der Sender selbst Informationen über benachbarte Transponder mitliefert. Diese Änderungen bewirken in der Regel, dass die neu hinzugekommenen Sender an das Ende der Kanalliste gelegt werden. Diese ist aber nicht im Interesse des Benutzers.

Es ist Aufgabe der vorliegenden Erfindung, ein Verfahren der eingangs genannten Art zu schaffen, bei welchem unabhängig vom DVB-Netzwerk die bei den Benutzern üblicherweise relevanten Kanäle bzw. Rundfunkprogramme immer die gleiche Reihenfolge der sortierten Sender erreicht wird und diese Kanäle bzw. Rundfunkprogramme in allen DVB-Netzwerken auf den gleichen Programmplätzen einer DVB-Empfangseinheit liegen. Ferner ist es Aufgabe der Erfindung eine DVB-Empfangseinheit zur Durchführung des erfindungsgemäßen Verfahrens anzugeben.

Die erstgenannte Aufgabe wird gelöst durch ein Verfahren mit den Merkmalen des Patentanspruchs 1.

Ein solches Verfahren zur Sendersortierung einer Senderliste einer DVB-Empfangseinheit mindestens eines Broadcast-Mediums, bei dem die DVB-Empfangseinheit mit einem aus mehreren DVB-Netzwerken auswählbaren Netzwerk verbindbar ist und die Senderliste mittels eines Sendersuchlaufs ermittelt wird sowie die Daten von den im Sendersuchlauf empfangenen Sendern mit Sortierkriterien verglichen werden, wobei wenigstens einem Programmplatz einer Programmliste der DVB-Empfangseinheit wenigstens ein Sortierkriterium zugeordnet wird und die empfangenen Sender in Abhängigkeit des Vergleichs dem jeweiligen Programmplatz zugeordnet werden, zeichnet sich erfindungsgemäß dadurch aus, dass
- dem wenigstens einen Programmplatz ein Datensatz oder mehrere Datensätze als diesen Programmplatz spezifizierendes Sortierkriterium bzw. spezifizierende Sortierkriterien zugeordnet wird bzw. werden,
- der Datensatz bzw. die Datensätze jeweils wenigstens einen aus netzwerkspezifischen DVB-Service-Informationen (DVB-SI) ausgewählten Parameter umfasst bzw. umfassen, und
- der mindestens eine Parameter eines Datensatzes einen Sender netzwerkspezifisch eindeutig spezifiziert bzw. die mindestens einen Parameter der Datensätze jeweils netzwerkspezifisch den gleichen Sender in unterschiedlichen Netzwerken eindeutig spezifizieren.

Mit einer solchen gemäß diesem erfindungsgemäßen Verfahren erstellte Programmliste wird unabhängig von dem gewählten DVB-Netzwerk immer die gleiche Reihenfolge der Sender erreicht, da jeder Sender bzw. Kanal auf einem Programmplatz netzwerkspezifisch eindeutig spezifiziert ist. Wenn also ein Kanal oder bzw. Sender in verschiedenen DVB-Netzen mit unterschiedlichen Datensätzen spezifiziert ist, werden diese unterschiedlichen Spezifikationen als Sortierkriterien für den Programmplatz verwendet, der für diesen Sender bzw. Kanal gemäß der Programmliste vorgesehen ist.

Damit kann mit diesem erfindungsgemäßen Verfahren auf der Basis der vorgegebenen Programmliste eine sortierte Senderliste erzeugt werden, bei der sowohl die allgemeinen bekannten Sender, wie ARD und ZDF usw. also auch die für ein DVB-Netzwerk, wie bspw. ein Kabelnetz (DVB-C) spezifischen Sender auf einzelnen Programmplätzen mit entsprechenden Datensätzen spezifiziert sind.

Ferner kann mit dem erfindungsgemäßen Verfahren eine sortierte Senderliste auf der Basis der vorgegebenen Programmliste erzeugt werden, bei der die diejenigen Kanäle bzw. Sender, die für Benutzer erfahrungsgemäß die wichtigsten Kanäle bzw. Sender darstellen, also bspw. die Sender ARD und ZDF immer auf dem gleichen Programmplatz liegen, wenn auf diesen Programmplätzen diese Sender idealerweise für alle DVB-Netzwerke netzwerkspezifisch spezifiziert sind. Mit einer solchen erfindungsgemäß vorgegebenen Programmliste ist es möglich, die für Benutzer wichtigen Sender, wie ARD und ZDF gewohnheitsmäßig auf die Programmplätze "1" und "2" zu legen, unabhängig an welchem DVB-Netzwerk die DVB-Empfangseinheit, wie bspw. eine DVB-Empfangseinheit angeschlossen ist.

Mit diesem Verfahren ist es auch möglich, abhängig von der im DVB-Netzwerk eingespeisten Version eines Senders (also z. Bsp. ob nur die SD oder die HD Version vorhanden ist) immer die bestmögliche Version auf den betreffenden Programmplatz zu legen.

Vorteilhaft ist es auch, wenn bereits in einer DVB-Empfangseinheit beim deren Erwerb durch einen Benutzer eine solche erfindungsgemäße Programmliste, die den allgemeinen Gewohnheiten der Benutzer entspricht, hinterlegt ist, so dass bereits bei einer Erstinstallation eine erfindungsgemäße Sendersortierung mit dieser Programmliste durchgeführt werden kann.

Wenn zwei verschiedene Kabelnetzbetreiber denselben Datensatz für unterschiedliche Kanäle bzw. Sender verwenden, kann es vorkommen, dass für einen Programmplatz ein Datensatz vorliegt, der für ein anderes DVB-Netzwerk vorgesehen ist und demzufolge zu einem falschen Kanal bzw. Sender führen würde. Dieser Fall wird gemäß einer vorteilhaften Weiterbildung der Erfindung dadurch verhindert, dass bei mehreren Datensätzen als Suchkriterium für einen Programmplatz die Reihenfolge der Datensätze derart gewählt wird, dass zuerst der netzwerkspezifische Datensatz aufgelistet wird, welcher dem Netzwerk entspricht, mit dem die DVB-Empfangseinheit aktuell verbunden ist.

In einer Ausgestaltung der Erfindung wird bzw. werden der Datensatz bzw. die Datensätze aus einer Dienstbeschreibungstabelle (SDT: Service Description Table) und/oder einer Ereignisbeschreibungstabelle (EIT: Event Information Table) ausgewählt, vorzugsweise umfasst bzw. umfassen der Datensatz bzw. die Datensätze aus der Dienstbeschreibungstabelle (SDT) und/oder der Ereignisbeschreibungstabelle als Parameter wenigstens eine Kennung des Netzwerkes (Original Network ID), eine Kennung des Transportstromes (Transport Stream ID), auf dem der Sender übertragen wird und eine Kennung für den Dienst (Service ID). Damit werden als Sortierkriterien zur Spezifizierung der Programmplätze nur wenige Parameter erfasst, die einen Sender bzw. Kanal eindeutig identifizieren.

Mit diesen drei Parametern, die auch um weitere Parameter aus den DVB-Service-Informationen (DVB-SI) erweitert werden können, kann nun eine Programmliste erstellt werden, bei der die Reihenfolge der Sender bzw. Kanäle vorgegeben werden kann. Da es sich bei diesen Parametern um Zahlen mit den Werten zwischen 0 und 65 535 handelt, ergeben sich 3x10¹⁴ Möglichkeiten.

Vorzugsweise werden für diese Datensätze deren drei Parameter in einer Metasprache dargestellt.

Besonders vorteilhaft ist die Verwendung dieser drei Parameter, wenn die DVB-Empfangseinheit an ein DCB-C-Netzwerk also an ein Kabelnetz angeschlossen ist. Denn die Netzwerkbetreiber verwenden in der Regel für die Signalzuführung das DVB-S-Netzwerk, also dessen Satellitensignale, so dass dabei diese drei genannten Parameter unverändert aus diesem DVB-S-Netzwerk übernommen werden. Das führt dazu, dass unabhängig davon, auf welcher Kabelfrequenz ein Kanal bzw. Sender umgesetzt wird, diese drei Parameter genügen, um einen Kanal eindeutig zu identifizieren. Ferner sind die Werte für diese Parameter für alle Kabelnetzbetreiber identisch, sofern sie diese Signalzuführung aus dem DVB-S-Netzwerk verwenden und die Parameter nicht ändern. Dies hat die Konsequenz, dass auf einem Programmplatz der erfindungsgemäßen Programmliste nur ein Datensatz mit diesen drei Parametern als Sortierkriterium abgelegt ist.

Weiterhin ist es gemäß einer vorteilhaften Weiterbildung der Erfindung vorgesehen, dass die Programmliste über das DVB-Netzwerk übermittelt wird, vorzugsweise über einen Fernsehkanal oder über eine Teletext-Seite. Damit kann ein Benutzer über eine Aktualisierung der erfindungsgemäßen Programmliste informiert werden, wenn sich bspw. die Kabelbelegung in einem Kabelnetz, also die Senderbelegung oder einzelne Kanalparameter geändert hat bzw. haben. Die Übermittlung der aktuellen Programmliste erfordert nur wenige Daten, da diese vorzugsweise nur die oben genannten drei Parameter umfassen.

Insbesondere ist es möglich, bei Empfang einer neuen Programmliste den Benutzer über die DVB-Empfangseinheit darauf hinzuweisen und ihn aufzufordern, an seinem Gerät einen Sendersuchlauf durchzuführen, so dass mit der dadurch erhaltenen Senderliste wieder eine Sendersortierung auf der Basis der neuen Programmliste durchgeführt werden kann.

Weiterbildungsgemäß wird die übermittelte Programmliste mit einem Zeitstempel versehen, so dass es mittels der DVB-Empfangseinheit in einfacher Weise möglich ist, festzustellen, wenn eine neue Programmliste übermittelt wurde, um ggf. einen Sendersuchlauf und eine entsprechende Sendersortierung durchzuführen.

Ferner ist in einer Ausgestaltung der Erfindung vorgesehen, in einem Empfangsbereitschaftsmodus der DVB-Empfangseinheit nach einer veränderten Programmliste in dem DVB-Netzwerk zu suchen und bei Empfang einer veränderten Programmliste eine Sendersortierung mit der Senderliste durchzuführen bzw. eine Aufforderungsanzeige für den Benutzer zu erzeugen, einen Sendersuchlauf durchzuführen, um eine aktualisierte Senderliste zur Sendersortierung verwenden zu können. So liegt dem Benutzer in seiner DVB-Empfangseinheit immer eine aktuelle und vollständige Programmliste und damit eine aktuell sortierte Senderliste vor.

Besonders vorteilhaft ist es, wenn die Programmliste von einem Dienstanbieter bereitgestellt, also insbesondere auch gepflegt wird.

Aufgrund der Vielzahl von DVB-Netzwerken, insbesondere Kabelnetzen (DVB-C-Netzwerk) kann es vorkommen, dass aus der über einen Sendersuchlauf ermittelten Senderliste nur wenige Sender aufgrund der Sortierkriterien in die Programmliste aufgenommen werden. In diesem Fall ist erfindungsgemäß vorgesehen, dass die über den Sendersuchlauf ermittelte Senderliste als Programmliste übernommen wird, wenn die relative Anzahl der mittels der Sortierkriterien zugeordneten Sendern bezogen auf die Anzahl der mit Sortierkriterien spezifizierten Programmplätze eine vorgegebene Schwelle unterschreitet. Dies kann insbesondere dann auftreten, wenn neben den allgemein zu empfangenden Sendern wie ARD und ZDF usw. und den privaten Programmanbietern auch spezielle Sender vorhanden sind, die bspw. nur Kabelnetzbetreiber für ihre Kunden zur Verfügung stellt, wie z. Bsp. Pay-TV-Angebote, oder der Kabelnetzbetreiber eigene Identifikation für die Sender verwendet.

Um in einer solchen Situation dennoch eine entsprechende Programmliste durch einen Dienstanbieter erstellen lassen zu können, kann in einem solchen Fall, wenn also die über den Sendersuchlauf ermittelten Senderliste als Programmliste übernommen wird, der Benutzer an seiner DVB-Empfangseinheit hierauf hingewiesen werden, dass dem die Programmliste erstellenden Dienstanbieter die Senderdaten dieses aktuell angeschlossenen Kabelnetzes nicht vorliegen und daher der Benutzer aufgefordert werden kann, die unsortierte Senderliste an diesen Dienstanbieter zu übermitteln. Damit ist es einem solchen Dienstanbieter möglich, eine aktuelle Programmliste zu erstellen, in der die Sender dieses Kabelnetzes auf freien Programmplätzen der Programmliste mittels der entsprechenden netzwerkspezifischen Datensätze spezifiziert werden.

Das erfindungsgemäße Verfahren ist für alle DVB-Netzwerke anwendbar, jedoch besonders für ein Kabelnetzwerk (DVB-C-Netzwerk) geeignet, über welches Rundfunkprogramme (Fernseh- und Radioprogramme) empfangen werden können.

Die zweitgenannten Aufgabe wird gelöst durch eine DVB-Empfangseinheit gemäß den Merkmalen des Anspruchs 16.

Hiernach umfasst eine solche DVB-Empfangseinheit für mindestens ein Broadcast-Medium eine Steuereinheit zur Durchführung eines Sendersuchlaufs zur Erzeugung einer Senderliste, wobei die Daten von den im Sendersuchlauf empfangenen Sendern mit Sortierkriterien verglichen werden, wenigstens einem Programmplatz einer Programmliste der DVB-Empfangseinheit wenigstens ein Sortierkriterium zugeordnet ist und die empfangenen Sender in Abhängigkeit des Vergleichs dem jeweiligen Programmplatz zugeordnet werden und wobei die Steuereinheit zur Durchführung des erfindungsgemäßen Verfahrens zur Sendersortierung ausgebildet ist.

Damit ist zur Realisierung des erfindungsgemäßen Verfahrens keine Änderung der Hardware einer DVB-Empfangseinheit, also eines DVB-Receivers erforderlich, sondern kann softwaremäßig umgesetzt werden.

Eine solche DVB-Empfangseinheit, bei der die Steuereinheit zur Durchführung des erfindungsgemäßen Verfahrens ausgebildet ist, kann die Programmliste, wie oben ausgeführt, über das DVB-Netzwerk übermittelt werden. Daneben ist es auch möglich, insbesondere zur Erstinstallation der Programmliste, diese Programmliste bspw. über eine USB-Schnittstelle auf die DVB-Empfangs-einheit zu übertragen. Auch kann später eine Änderung oder Aktualisierung über eine solche USB-Schnittstelle durchgeführt werden.

Die Erfindung wird nachstehend anhand von Ausführungsbeispielen unter Bezugnahme auf die nachstehenden Tabellen ausführlich beschrieben.

Es wird ein Verfahren zur automatischen Sortierung der Kanäle bzw. Sender nach einem automatischen Sendersuchlauf bei einer DVB-Empfangseinheit, also einem DVB-C-Receiver (sog. Set-Top-Box oder in Fernseher integrierter DVB-C-Tuner) beschrieben.

Das Verfahren beruht darauf, dass bei der digitalen Übertragung von Rundfunksendern nur wenige Parameter notwendig sind, um einen Kanal bzw. Sender eindeutig zu identifizieren. Bei der digitalen Übertragung reicht in der Regel die sogenannte Original Network ID, die Transport Stream ID und die Service ID aus, um einen Sender eindeutig zu identifizieren. Das Verfahren kann aber auch um weitere Parameter erweitert werden.

Mit diesen zu einem Datensatz zusammengefassten drei Parametern ist für jeden Programmplatz einer Programmliste ein Kanal bzw. Sender eindeutig definiert, wobei mit einer solchen Programmliste die Belegung der einzelnen Programmplätze vorgegeben ist. Die gewählte Belegung geht von allgemeinen Benutzergewohnheiten aus, wie bspw. dass die bekannten Sender wie ARD und ZDF auf vorderen Programmplätzen zu platzieren sind. Eine solche vorgegebene Programmliste wird von einem Dienstleister erstellt, aktualisiert und an Benutzer von DVB-Empfangseinheiten über das Kabelnetz übermittelt.

Damit ist es möglich, einen solchen Benutzer automatisch über die DVB-Empfangseinheit über Änderungen der Senderbelegung oder einzelner Kanalparameter in seinem Kabelnetz zu informieren, so dass immer eine aktuelle und vollständige Programmliste in seiner DVB-Empfangseinheit vorliegt. Auch ist es möglich, DVB-Empfangseinheiten bereits mit einer solchen Programmliste auszustatten, mit der das erfindungsgemäße Verfahren durchführbar ist. So findet ein Käufer einer solchen DVB-Empfangseinheit bereits bei der Erstinstallation eine allgemeinen Gewohnheiten entsprechende Programmliste vor.

Zunächst führt eine an ein Kabelnetz (DVB-C-Netz) angeschlossene DVB-Empfangseinheit einen Sendersuchlauf durch und erhält die in der nachfolgenden Tabelle 1 aufgeführten Sender. In diesem Beispiel werden vier Sender, die genau in der Reihenfolge, in der sie gefunden worden sind, in einer Steuereinheit der DVB-Empfangseinheit zwischengespeichert.

**Tab. 1**

| Nr. | Sender, Empfangsparameter |
|---|---|
| 1 | XYZ: Wert 1= 1 Wert 2 = 3 Wert 3 = 4 |
| 2 | ZDF: Wert 1= 5 Wert 2 =73 Wert 3 = 400 |
| 3 | ARD: Wert 1= 101 Wert 2 = 99 Wert 3 = 15 |
| 4 | RTL: Wert 1 = 33 Wert 2 = 22 Wert 3 = 6 |

Ferner ist in der DVB-Empfangseinheit eine Programmliste mit aus jeweils drei Parametern bestehenden Datensätzen für die gewünschten Programmplätze hinterlegt, wobei für einen Programmplatz mehrere solcher Datensätze mit jeweils Parametern hinterlegt sein können, die jeweils einen Kanal bzw. Sender in verschiedenen Kabelnetzen charakterisieren bzw. spezifizieren.

Um Gruppierungen erzeugen zu können, sind nicht alle Programmplätze belegt. In diesem Beispiel gemäß Tabelle 2 sind fünf Sender vorgegeben, die auf den Programmplätzen 1, 2, 3, 5 und 10 spezifiziert sind. Für die Programmplätze 1, 3 und 10 sind jeweils zwei Datensätze mit jeweils drei Parametern vorgesehen, da diese Sender beispielsweise in diesen beiden Spezifizierungen in unterschiedlichen Kabelnetzen vorhanden sind. Die Programmplätze 2 und 5 sind nur jeweils durch einen Datensatz spezifiziert, da diese Sender in allen Kabelnetzen die gleichen Parameter, also identische Datensätze aufweist.

**Tab. 2**

| Progr. Nr | Empfangsparameter |
|---|---|
| 1 | Wert 1 = 101 Wert 2 = 12 Wert 3 = 15 |
| | Wert 1 = 101 Wert 2 = 99 Wert 3 = 15 |
| 2 | Wert 1 = 5 Wert 2 = 73 Wert 3 = 400 |
| 3 | Wert 1 = 101 Wert 2 = 132 Wert 3 = 16 |
| | Wert 1 = 101 Wert 2 = 199 Wert 3 = 13 |
| 5 | Wert 1 = 6101 Wert 2 = 10 Wert 3 = 2 |
| 10 | Wert 1 = 33 Wert 2 = 22 Wert 3 = 6 |
| | Wert 1=111 Wert 2=9 Wert 3 = 5 |

Nun wird mittels der Programmliste gemäß Tabelle 2 Zeile für Zeile abgearbeitet, indem die Datensätze aus dieser Programmliste als Sortierkriterium für die Sender aus der Senderliste gemäß Tabelle 1 verwendet werden. Im ersten Schritt wird versucht, den Programmplatz 1 mit einem Sender zu belegen, der die Parameter Wert 1 = 101, Wert 2 = 12 und Wert 3 = 15 als den ersten aufgeführten Datensatz auf dem Programmplatz 1 aufweist. Ein Vergleich dieses Datensatzes mit den Parametern aus der Tabelle 1 führt zu dem Ergebnis, dass ein entsprechender Sender in dem Zwischenspeicher nicht vorhanden ist, daher bleibt Programmplatz 1 zunächst leer, wie in der folgenden Tabelle 3 dargestellt ist.

**Tab. 3**

| Progr. Nr. | Sender |
|---|---|
| | |

Anschließend wird ein Vergleich der Sender aus der Tabelle 1 mit dem zweiten Datensatz des Programmplatzes 1 durchgeführt, der die Parameter Wert 1 = 101, Wert 2 = 99 und Wert 3 = 15 aufweist. Ein Kanal bzw. Sender ist in dem Zwischenspeicher gemäß Tabelle 1 an der 3. Position gegeben, also wird dieser Kanal auf den Programmplatz 1 der Programmliste gemäß folgender Tabelle 4 gespeichert.

**Tab. 4**

| Progr. Nr. | Sender |
|---|---|
| 1 | ARD |
| | |

Hiermit ist Programmplatz 1 belegt und es wird der nächste Programmplatz aus der Tabelle 2 bearbeitet, selbst wenn noch weitere Datensätze für Programmplatz 1 vorhanden wären.

Als nächstes wird ein Kanal bzw. Sender gesucht, der einen Datensatz mit den Parametern Wert 1 = 5, Wert 2 = 73 und Wert 3 = 400 aufweist. Ein Vergleich dieses Datensatzes mit den Parametern aus dem Zwischenspeicher gemäß Tabelle 1 zeigt eine Übereinstimmung mit einem Sender auf der 2. Position, folglich wird dieser Kanal bzw. Sender auf den Programmplatz 2 gespeichert, wie dies nachfolgende Tabelle 5 zeigt.

**Tab. 5**

| Progr. Nr. | Sender |
|---|---|
| 1 | ARD |
| 2 | ZDF |
| | |

Als nächstes wird ein Kanal bzw. Sender gesucht, der für den Programmplatz 3 mit zwei Datensätzen spezifiziert ist. Ein Vergleich mit der Senderliste gemäß Tabelle 1 zeigt, dass hierfür kein Sender bzw. Kanal vorhanden ist, somit wird Programmplatz 3 nicht belegt. Genauso ist es mit Programmplatz 5, auch ist hierfür kein passender Kanal im Zwischenspeicher gemäß Tabelle 1 vorhanden.

Im Weiteren wird ein Kanal bzw. Sender in der Tabelle 1 gesucht, der für Programmplatz 10 mit zwei Datensätzen gemäß Tabelle 2 spezifiziert ist. Ein Vergleich des ersten Datensatzes mit den Parametern aus der Tabelle 1 führt zu einer Übereinstimmung mit dem Sender der 4. Position. Damit wird dieser Sender auf den Programmplatz 10 gespeichert. Der zweite Datensatz auf der Programmposition 10 wird nicht mehr geprüft. Damit sieht die Programmliste gemäß folgender Tabelle 6 folgendermaßen aus:

**Tab. 6**

| Progr. Nr. | Sender |
|---|---|
| 1 | ARD |
| 2 | ZDF |
| 10 | RTL |
| | |

Hiermit ist die gesamte Programmliste mit den Datensätzen gemäß Tabelle 2 abgearbeitet. In einem letzten Schritt werden jetzt alle Kanäle bzw. Sender aus dem Zwischenspeicher gemäß Tabelle 1, die nicht zugeordnet sind, ab einer vom System vorgegebenen Programmnummer gespeichert. In diesem Fall sei angenommen, dass hier alle nicht zugeordneten Kanäle ab Programmplatz 100 gespeichert werden. Dies können beispielsweise Testkanäle sein, wie in der folgenden Tabelle 7 dargestellt ist.

**Tab. 7**

| Progr. Nr. | Sender |
|---|---|
| 1 | ARD |
| 2 | ZDF |
| 10 | RTL |
| 100 | XYZ |

In einem letzten Schritt wird mittels der DVB-Empfangseinheit überprüft, wie viele der in der Programmliste gemäß Tabelle 2 mit entsprechenden Datensätzen spezifizierten Kanäle bzw. Sender tatsächlich zu Sender der zwischengespeicherten Senderliste gemäß Tabelle 1 zugeordnet werden konnten. In dem vorliegenden Beispiel sind das drei der fünf spezifizierten Programmplätze, entspricht also 60%. Wenn die im System hinterlegte Schwelle kleiner als 60% ist, dann würde die DVB-Empfangseinheit die Sender in der Originalreihenfolge speichern und dem Benutzer des Systems eine Nachricht mit der Anforderung anzeigen, die ursprüngliche in dem Zwischenspeicher gespeicherte Senderliste gemäß Tabelle 1 an einen die Programmliste erstellenden Dienstleister zu übermitteln, damit dieser die Parameter dieser Sender dieses aktuellen Kabelnetzes in die Programmliste zu deren Aktualisierung aufnehmen kann.

Mit diesem beschriebenen Verfahren wird gewährleistet, dass unabhängig vom angeschlossenen Kabelnetz bei den wichtigsten Kanälen immer die gleiche Reihenfolge der Sender erreicht wird und diese Kanäle in allen Kabelnetzen auf den gleichen Programmplätzen liegen, selbst wenn ein Sender, der sich in der Programmliste auf einem davor liegenden Programmplatz befindet, in einem aktuellen Kabelnetz nicht eingespeist wird, so dass sich dadurch Lücken in der Programmliste ergeben können.

Da die wichtigsten Programme in Deutschland, wie ARD, ZDF etc. in der Regel nach dem beschriebenen Verfahren auf die Kabel Transponder umgesetzt werden, erhält auch ein Benutzer in einem Kabelnetz, für das in der Programmliste gemäß Tabelle 2 noch kein Datensatz vorhanden ist, trotzdem auf den vorderen wichtigen Programmplätzen eine gewohnte Senderliste.

Um bei Änderungen in der Kabelbelegung den Benutzer darauf hinzuweisen, ist eine Aktualisierung der Programmliste gemäß Tabelle 2 notwendig. Deren Datenmenge ist aufgrund der geringen Anzahl an Parametern der Datensätze so klein, dass sie beispielsweise über den Teletext eines Senders, der in allen deutschen Kabelnetzen vorhanden ist, übertragen werden kann. Über einen Zeitstempel, mit dem eine Programmliste ausgestattet werden kann, kann die DVB-Empfangseinheit bei der Analyse der Teletextseite feststellen, ob eine Änderung vorliegt. Eine Analyse der Teletext Seite kann beispielsweise dann erfolgen, wenn der Benutzer die DVB-Empfangseinheit in den Standy-Modus schaltet.

Wenn mittels einer DVB-Empfangseinheit anhand der neuen Programmliste eine Änderung feststellt wird, wird der Benutzer darauf hingewiesen und aufgefordert, eine neue automatische Sendersuche an seiner DVB-Empfangseinheit durchzuführen. Der Benutzer erhält damit für seine DVB-Empfangseinheit eine neue sortierte Senderliste.

Die DVB-Empfangseinheit kann derart ausgebildet werden, dass die in ihr hinterlegte Programmliste mit den die Kanäle bzw. Sender spezifizierenden Datensätzen änderbar bzw. aktualisierbar ist. Dies kann händisch, beispielsweise über ein Update über eine USB Schnittstelle, oder automatisch, wie oben erläutert, über das Kabelnetz erfolgen.

## Patentansprüche

1. Verfahren zur Sendersortierung einer Senderliste einer DVB-Empfangseinheit mindestens eines Broadcast-Mediums, bei dem die DVB-Empfangseinheit mit einem aus mehreren DVB-Netzwerken auswählbaren Netzwerk verbindbar ist und die Senderliste mittels eines Sendersuchlaufs ermittelt wird sowie die Daten von den im Sendersuchlauf empfangenen Sendern mit Sortierkriterien verglichen werden, wobei wenigstens einem Programmplatz einer Programmliste der DVB-Empfangseinheit wenigstens ein Sortierkriterium zugeordnet wird, und die empfangenen Sender in Abhängigkeit des Vergleichs dem jeweiligen Programmplatz zugeordnet werden,
**dadurch gekennzeichnet, dass**
- dem wenigstens einen Programmplatz ein Datensatz oder mehrere Datensätze als diesen Programmplatz spezifizierendes Sortierkriterium bzw. spezifizierende Sortierkriterien zugeordnet wird bzw. werden,
- der Datensatz bzw. die Datensätze jeweils wenigstens einen aus netzwerkspezifischen DVB-Service-Informationen (DVB-SI) ausgewählten Parameter umfasst bzw. umfassen, und
- der mindestens eine Parameter eines Datensatzes einen Sender netzwerkspezifisch eindeutig spezifiziert bzw. die mindestens einen Parameter der Datensätze jeweils netzwerkspezifisch den gleichen Sender in unterschiedlichen Netzwerken eindeutig spezifizieren.

2. Verfahren nach Anspruch 1,
**dadurch gekennzeichnet, dass** bei mehreren Datensätzen als Suchkriterium für einen Programmplatz, die Reihenfolge der Datensätze derart gewählt wird, dass zuerst der netzwerkspezifische Datensatz aufgelistet wird, welcher dem Netzwerk entspricht, mit dem die DVB-Empfangseinheit aktuell verbunden ist.

3. Verfahren nach Anspruch 1 oder 2,
**dadurch gekennzeichnet, dass** der Datensatz bzw. die Datensätze aus einer Dienstbeschreibungstabelle (SDT: Service Description Table) und/oder einer Ereignisbeschreibungstabelle (EIT: Event Information Table) ausgewählt wird bzw. werden.

4. Verfahren nach Anspruch 3,
**dadurch gekennzeichnet, dass** der Datensatz bzw. die Datensätze aus der Dienstbeschreibungstabelle (SDT) und/oder der Ereignisbeschreibungstabelle als Parameter wenigstens eine Kennung des Netzwerkes (Original Network ID), eine Kennung des Transportstromes (Transport Stream ID), auf dem der Sender übertragen wird und eine Kennung für den Dienst (Service ID) umfasst bzw. umfassen.

5. Verfahren nach Anspruch 4,
**dadurch gekennzeichnet, dass** die Parameter in einer Metasprache dargestellt werden.

6. Verfahren nach einem der vorhergehenden Ansprüche,
**dadurch gekennzeichnet, dass** die Programmliste über das DVB-Netzwerk übermittelt wird.

7. Verfahren nach Anspruch 6,
**dadurch gekennzeichnet, dass** die Programmliste von einem Dienstanbieter bereitgestellt wird.

8. Verfahren nach einem der vorhergehenden Ansprüche,
**dadurch gekennzeichnet, dass** die über den Sendersuchlauf ermittelte Senderliste als Programmliste übernommen wird, wenn die relative Anzahl der mittels der Sortierkriterien zugeordneten Sendern bezogen auf die Anzahl der mit Sortierkriterien spezifizierten Programmplätze eine vorgegebene Schwelle unterschreitet.

9. Verfahren nach Anspruch 7 und 8,
**dadurch gekennzeichnet, dass** die Senderliste dem Dienstanbieter übermittelt wird.

10. Verfahren nach einem der Ansprüche 6 bis 9,
**dadurch gekennzeichnet, dass** die Übermittlung der Programmliste über das DVB-Netzwerk erfolgt, vorzugsweise über einen Fernsehkanal oder über eine Teletext-Seite.

11. Verfahren nach Anspruch 10,
**dadurch gekennzeichnet, dass** die übermittelte Programmliste mit einem Zeitstempel versehen ist.

12. Verfahren nach einem der vorhergehenden Ansprüche,
**dadurch gekennzeichnet, dass** in einem Empfangsbereitschaftsmodus der DVB-Empfangseinheit nach einer veränderten Programmliste in dem DVB-Netzwerk gesucht wird.

13. Verfahren nach Anspruch 12,
**dadurch gekennzeichnet, dass** bei Empfang einer veränderten Programmliste und einem veranlassten automatischen Sendersuchlauf eine Sendersortierung mit der Senderliste durchgeführt wird.

14. Verfahren nach Anspruch 13,
**dadurch gekennzeichnet, dass** die Senderliste mit einem Sendersuchlauf nach Empfang der veränderten Programmliste ermittelt wird.

15. Verfahren nach einem der vorhergehenden Ansprüche,
**dadurch gekennzeichnet, dass** das DVB-Netzwerk als Kabelnetzwerk (DVB-C-Netzwerk) ausbildet ist, wobei Rundfunkprogramme (Fernseh- und Radioprogramme) empfangen werden.

16. DVB-Empfangseinheit für mindestens ein Broadcast-Medium umfassend eine Steuereinheit zur Durchführung eines Sendersuchlaufs zur Erzeugung einer Senderliste, wobei die Daten von den im Sendersuchlauf empfangenen Sendern mit Sortierkriterien verglichen werden, wenigstens einem Programmplatz einer Programmliste der DVB-Empfangseinheit wenigstens ein Sortierkriterium zugeordnet ist und die empfangenen Sender in Abhängigkeit des Vergleichs dem jeweiligen Programmplatz zugeordnet werden, und wobei die Steuereinheit zur Durchführung eines Verfahrens nach einem der vorhergehenden Ansprüche ausgebildet ist.
